# EUROPEAN PATENT APPLICATION

(11) **EP 4 425 326 A1**
(43) Date of publication of application: **04.09.2024**
(21) Application number: 23305265.3
(22) Date of filing: 28.02.2023
(51) Int. Cl.: G06F 8/65, G06F 8/61, G06F 8/71

(54) **A METHOD FOR UPDATING APPLICATIONS INSTALLED IN A PLURALITY OF SECURE ELEMENTS COMPRISED IN A DEVICE**

(71) Applicant: THALES DIS FRANCE SAS, 92190 Meudon (FR)
(72) Inventor: BOTUHA, Stephane, 83140 Six Fours les Plages (FR); LAN, Arnaud, 13600 La Ciotat (FR)
(74) Representative: Scheer, Luc

(57) **Abstract**

The invention proposes a method for updating applications, called previous applications, installed in a plurality of secure elements 30 comprised in a device, the method comprising sending over the air for each of the secure elements 30 a script comprising a new ELF version containing the latest version of the applications, from an update server to a system manager connected to the secure elements 30, wherein the script contains for each of the secure elements 30:
- an entire AID of the new ELF version;
- a partial AID identifying the previous application,
the method comprising, for each of the secure elements 30:
- for each secure element 30 and corresponding partial AID, loading the latest version of the application identified by the entire AID and executing the latest version of the application in each of the secure elements 30;
- if the execution of at least one application fails, for each of the secure elements 30, restoring the previous application the entire AID for designing the application to be updated.

## Description

The present invention relates to telecommunications and more precisely to a method for updating applications installed in at least one electronic component and in a secure element.

In the scope of the invention, the electronic component(s) and the secure element (like for example an eSE (embedded Secure Element), an eSIM (embedded SIM like an eUICC or an iUICC)) are comprised in a connected device, like for example a fridge, an electric meter, a door lock, a car, a laptop, a smartphone, a PDA,... The connected device comprises a system manager connected to the electronic component(s) and to the secure element. The system manager is able to communicate with an update server, for example an OTA (Over The Air) server. This communication allows in particular to update the applications present in the electronic component(s) and in the secure element, for example on a regular basis.

The electronic components are generally microprocessors containing such applications. In the automotive domain, the connected device is for example a car comprising such a system manager and electronic components connected to the system manager. In a particular case, a secure element is also connected to the system manager.

The update of applications then consists in updating (or replacing) the applications present in the electronic components and in the secure element. All the applications are updated if necessary.

The Global Platform standard proposes in his amendment H (for example as described in "Global Platform Technology Executable Load File Upgrade Card Specification v2.3 - Amendment H Version 1.1 Public Release March 2018 - Document Reference: GPC_SPE_120") an extension of the GlobalPlatform Card Specification to facilitate the upgrade of Executable Load Files (ELFs) present in a Secure Element. An ELF is an Executable Load File.

More precisely, this amendment H proposes a solution to switch from one version of an application to another version.

In this amendment H, it is precised that all modern digital devices allow for a software upgrade process, especially where there is a network connection available. The reasons for upgrading software are numerous: Fixing bugs, adding new features, etc. With billions of pieces deployed, smart cards definitely need their own software upgrade mechanism. Regarding deployment, the fundamental difference between upgrading classic software and smart card (i.e. secure element) software is the existence of persistent instances of software programs. These instances are created and personalized by Service Providers with both user data and secret or sensitive data. The personalization process can sometimes be complex and expensive and ideally should not be repeated in case of software upgrades. It is not a good solution for Service Providers to simply delete their applications (and related data), then install and personalize them again. It is also necessary to consider some of the technical characteristics of smart cards, which in general may be limited in memory space (both RAM and NVRAM). It is very common that after personalization and deployment, a smart card has almost no memory space left. Amendment H focuses on GlobalPlatform cards implementing the Java Card Specifications. In particular:
- An Executable Load File is a Java Card package.
- An Executable Module is a Java Card Applet class.
- An Application is a Java Card Applet instance.

Each of these are identified by an AID (Application IDentifier).

This amendment H describes in particular the Executable Load File Upgrade Process. The ELF being upgraded will be commonly referred to as the "old ELF version" and the ELF upgrading the old ELF version will be commonly referred to as the "new ELF version". The ELF upgrade process is basically composed of the following phases:
- Saving Phase: Each existing Application instance created from the old ELF version can save its instance data using the Upgrade API. Registry data (instance data that is not manipulated directly by application instances) is saved automatically. The old ELF version, its application instances, and their instance data are then deleted, except for the instance data saved using the Upgrade API and the automatically saved Registry data. The loading phase can then be started immediately or be postponed and performed later.
- Loading Phase: During this phase, the new ELF version is loaded. Before loading the new ELF version, library ELFs previously imported by and left unused after the deletion of the old ELF version may be deleted/replaced, unrelated ELFs may be deleted/loaded, and new library ELFs may be loaded (e.g. a new library ELF imported by the new ELF version). After the new ELF version has been loaded, the Restore Phase can start.
- Restore Phase: New Application instances are automatically created from the new ELF version, in the same number and with the same AIDs as previously existing Application instances. Each new Application instance is permitted to restore the instance data from the previous Application instance that had the same AID. The Registry data of the previous

Application instance is also automatically restored and associated with the new Application instance.

So, in summary, the upgrade process is divided like this:
During the Saving Phase, a first Amendment H command (MANAGE ELF UPGRADE [start]) triggers the deletion of the old ELF version and the associated instances while retaining the user data on the SE (Secure Element).

During the Loading Phase, a set of commands (regular Global Platform Card Specification commands) will be used to load the new ELF (the binary code of the new package P2) on the SE.

During the Restore Phase, a last Amendment H command (MANAGE ELF UPGRADE [resume]) triggers the instantiation of the new ELF and the restoration of the user data in this Application instance.

A problem is that amendment H does not propose a solution permitting to go back to the previous version (there is no mechanism in amendment H for performing this task) once the upgrade is finished. One solution would be to send a new amendment H script (exactly the same scheme as before but the other way around): Asking to switch from package P2 to package P1. Again, we need to know P1 (that will be the new package), its AID and the final script.

GlobalPlatform is applicable to secure elements having security tasks in a system. Basically, GP applies to Sim cards. A Sim card is a UICC (Universal Integrated Circuit Card). With the current UICC improvements, UICCs have been replaced by eUICCs (embedded UICCs) and iUICCs (integrated UICCs). They are also eSE (Embedded Secure Elements) that do not perform telecommunication tasks: They embed transport applications, banking applications, management of electronic car keys...

If during the execution of a script of a new ELF version in one of these secure elements something goes wrong, a Recovery Procedure takes place and reverts this specific secure element to the previous version of the ELF.

But if the execution of the script succeeds (for example for other secure elements in the global system), we need to run a new script in order to revert to the previous version of the ELF.

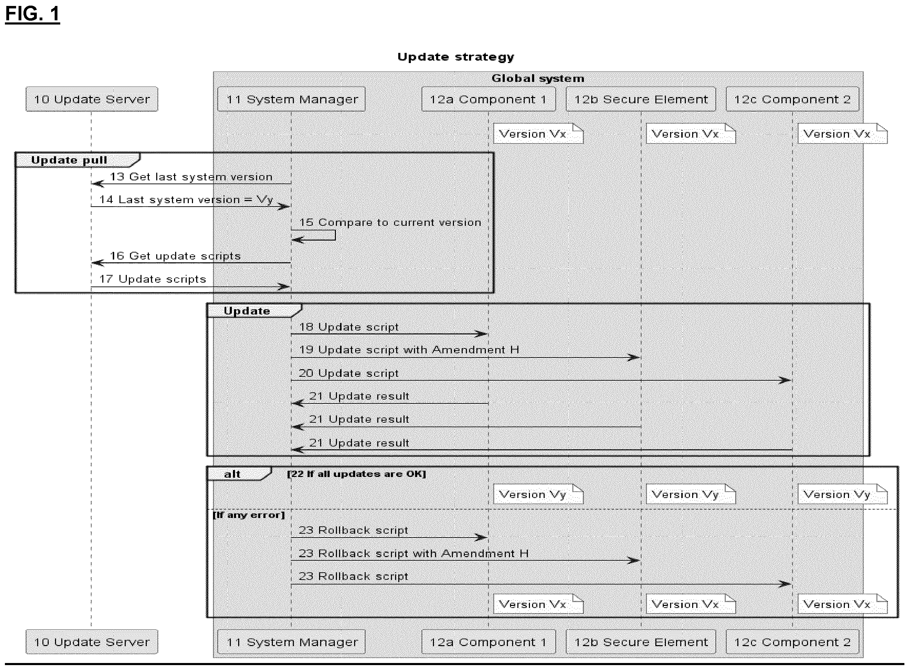

Figure 1 shows how an update of applications could be realized in a global system containing several components including one or several secure elements which would be updated according to amendment H of GP.

In this figure, several elements are represented:
- an update server 10, typically an OTA platform;
- a global system comprised in a device, like a car for example, comprising:
   ∘ a system manager 11;
   ∘ different components (eSEs) 12a to 12c.

Each component 12a-12c comprises at least an application that can be updated over the air by the update server 10. Typically, such updates consist in sending from the update server 10 to the system manager 11 a script for each component 12a-12c containing the latest version of the corresponding application(s). The system manager 11 is connected to the different components12a-12c.

Here, the components 12a and 12c are components that are not secure elements comprising sensitive data and the component 12b is a secure element that comprises sensitive data (it is for example an eSE).

Also, each component 12a-12c has its own latest version of application stored in it (version x, x being possibly different for each component).

The update of the applications consists in the following steps:
At step 13, the system manager 11 asks the update server 10 if he has new versions of applications to be downloaded to the components 12a-12c.

At step 14, the update server returns the available version for each component: Version y (y can be different for each component).

At step 15, the system manager 11 compares versions y with the versions x installed in the components 12a-12c. If these versions are different, the system manager 11 requires the update server 10 to send him update scripts and these scripts are sent to the system manager 11 at step 17 from the update server 10.

Then the update procedure can begin: At steps 18 to 20, these updates scripts are sent to the different components 12a-12c. More precisely, updates scripts are sent to the components 12a and 12c at steps 18 and 20 and an update script is sent at step 19 to the secure element 12 according to amendment H. The components 12a-12c then execute these scripts and send at step 21 the update results.

Then, there are two alternatives:
- at step 22, all updates are OK (a new version y has been successfully installed in the different components). As already said, y can be different for each component.
- at step 23, if at least one update has failed, rollback procedures take place:
   ∘ The components 12a and 12c return to their previous version x;
   ∘ The secure element 12b return to its previous version x by executing the rollback procedure according to amendment H of GP.

The whole system is then at its situation where it was before the updating procedure (each component returns to its previous version after the Rollback procedure).

But there is a problem when the update server does not know which version(s) of the application(s) are installed in the components: The server can for example only store the latest versions of the applications.

This is particularly the case in the automotive world: The update server does not know which vehicle has been sold and is in the field. When an update of the Applications has to be performed, automatically or on demand by the end-user, the latest version of all Applications have to be downloaded in each component. The update server has only the latest versions of all Applications.

The problem of the solution described in regard of figure 1 is that it is necessary to know the AID of the previous ELF but the server does not know the current version of the application. And when a rollback procedure is executed, it is necessary to know the AID and the binary code of the previous ELF but the server does not have these information.

The context of the invention is that it is wished to update the whole system, including the ESE, in order that each component has the latest version of its application and this version must be the same for all the components (all components will have the latest existing version at the end of the procedure if the executions of the updates are successful), otherwise all components will return to their previous version x (x can be different for each component) at the end of the procedure if the executions of the updates are not successful.

In this respect, the invention proposes a solution according to claim 1.

The invention will be better understood by reading the following description of the figures that represent:
- Figure 1 the state of the art;
- Figure 2 how secure elements are updated with an improvement of Amendment H according to the invention;
- Figure 3 the rollback mechanism performed with an improvement of Amendment H according to the invention.

Figure 1 has been described in the scope of the prior art.

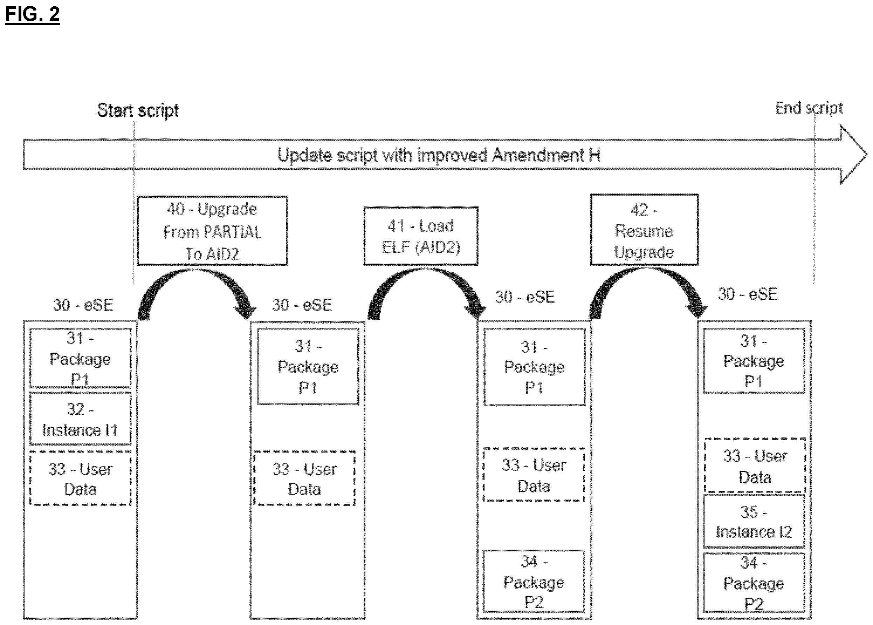

Figure 2 shows how secure elements are updated with an improvement of Amendment H according to the invention.

In this figure, a single eSE 30 is represented but the invention applies to the upgrade of software in each secure element. Each secure element can be:
- an eSE,
- a UICC,
- an eUICC,
- an iUICC.

The secure elements are not necessarily of the same kind but they have all a security function and some of them (at least one) can have a telecommunication function (with a MNO) in order that the device in which it is included is able to communicate with the update server.

As mentioned before, the secure elements are comprised in a device, a car for example.

In a pre-update state, the eSE comprises an ELF (Package P1 31), an instance I1 32 in which the mentioned application is instantiated (executed) and user data 33 that have to be kept during all the process.

The method of the invention proposes to update the application comprised in the package 31, this application being called previous application. For updating this application, the following has to be considered:
- scripts comprising new ELFs versions containing the latest versions of the applications are sent to all secure elements present in the device, from the update server to the system manager connected to the secure elements;
- these scripts contain for each of the secure elements:
   ∘ a partial AID identifying the previous application (the application already installed and executed in the secure element);
   ∘ an entire AID of the new ELF version;
   ∘ the latest version of the ELF binary code identified by the previous entire AID.

Turning back to figure 2, in a first step 40 corresponding to the Saving Phase, the update script sends to the secure element 30 a partial AID identifying the previous application (the application already installed and executed in the secure element).

For example, the partial AID is identical to an entire AID where the version number of the ELF is missing. In other words, the partial AID does not contain the version of any ELF.

In a particular implementation, for a complete AID of 11 bytes, we have for example 9 bytes that fully identify the type of application and 2 bytes identifying the version of the application.

In this case, the secure element 30 can identify the application to be updated, thanks to the partial AID (contained in 9 bytes).

Further to this step, the secure element deletes the instance 32 but keeps package 31 comprising the current application and the user data 33. Package 31 might be hidden by the eSE so that it cannot be used anymore unless a Rollback operation is triggered.

In the next step 41 corresponding to the Loading Phase, the script loads a new ELF with an entire AID (AID2) identifying the new ELF version (i.e. the script of the latest version of the application). A new package P2 34 is then created with AID2, this package containing the binary code of the latest version of the application.

In the next step 42 corresponding to the Restore Phase, the script loaded in Package 34 is instantiated, this generating an instance I2 35.

If the update procedure is correctly executed in all the components of the device, the update is finished.

Otherwise, if the execution of at least one application fails in a component, for each of the components, the previous version of their applications are restored.

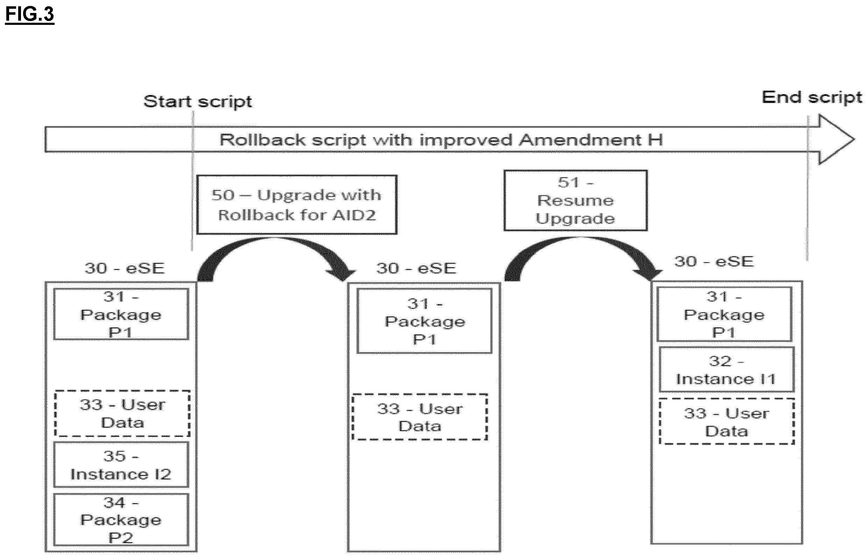

This is represented in figure 3 that represents the rollback mechanism performed with an improvement of Amendment H for a given secure element. The term "rollback" designates a method allowing to cancel all the requests that have just been made.

In this figure, we start with the latest configuration of the secure element 30 comprising:
- the previous package 31;
- the user data 33;
- the package 34 containing the script of the latest version of the application;
- the instance 35.

The rollback script according to the invention instructs (at step 50) the secure element to delete the new installed package (package 34) and the corresponding instance 35. This is done by requiring a rollback of the entire AID, AID2. This corresponds to the Saving Phase.

Package 31 containing the previous application and the user data 33 remain in the secure element 30. This means that no Loading Phase is necessary.

The next step (Resume Upgrade 51) requests the secure element 30 to execute the application installed in the package 31, this creating a new instance I1 32. This corresponds to the Restore Phase.

The secure element contains now the same elements that it contained at the beginning of the update procedure (see the first state of the secure element 30 in figure 2).

In summary, the invention proposes to modify two commands in the amendment H:
- the first command of amendment H uses according to the invention a partial AID to identify the package that has to be replaced and a new parameter in this same command indicates to the secure element to keep the old (previous) package. When the secure element sees the new command as part of the AID, it knows which package has to be replaced, forms the instance (keeps the previous package and the data) then performs the GP load;
- and when performing the second amendment H command, as before an installation of the new package is performed and this new executed package is linked with the user data. So at the end we still have the new package. In case of rollback, the old package P1 does not need to be downloaded because it is already present in the secure element.

According to the invention, each device will receive a different script since it does not contain the same applications. In contrast, each device (or connected device) will received the same update script for a given eSE, whatever the current version of the application installed in this eSE. And if any of the secure element fails to execute the update script correctly, there will be a new phase (rollback) where all secure elements go back to their previous versions.

In the state of the art, current version and rollback management needs to be handled entirely on server side with knowledge of the exact content of each piece of Secure Element on the field. This is no more the case in the present invention that proposes an improvement of the Global Platform Amendment H (Executable Load File Upgrade).

Another advantage is that the invention eases the version management on the update server side, since the update server only needs to know the latest version available.

## Claims

1. A method for updating applications, called previous applications, installed in a plurality of secure elements (30) comprised in a device, said method comprising sending over the air for each of said secure elements (30) a script comprising a new ELF version containing the latest version of said applications, from an update server to a system manager connected to said secure elements (30), wherein said script contains for each of said secure elements (30):
- an entire AID of said new ELF version;
- a partial AID identifying said previous application,
said method comprising, for each of said secure elements (30):
- for each secure element (30) and corresponding partial AID, loading said latest version of said application identified by said entire AID and executing said latest version of said application in each of said secure elements (30);
- if the execution of at least one application fails, for each of said secure elements (30), restoring said previous application said entire AID for designing said application to be updated.

2. A method according to claim 1, wherein said device is a connected device.

3. A method according to any of the claims 1 and 2, wherein said update server is an OTA platform.

4. A method according to any of the claims 1 to 3, wherein said secure element (30) is one of:
- an eSE,
- a UICC,
- an eUICC,
- an iUICC.
